# EUROPEAN PATENT APPLICATION

(11) **EP 4 218 424 A1**
(43) Date of publication of application: **02.08.2023**
(21) Application number: 22159364.3
(22) Date of filing: 01.03.2022
(51) Int. Cl.: A23L 5/10, A47J 37/00, A47J 37/01, A47J 37/06, F24C 7/02, F24C 7/04, F24C 7/08

(54) **COOKING PROCESS IMPLEMENTATION**

(30) Priority: 27.01.2022 WO PCT/CN2022/074385
(71) Applicant: Versuni Holding B.V., 5656 AE Eindhoven (NL)
(72) Inventor: TAN, Jingwei, 5656 AE Eindhoven (NL); SUN, Wen, 5656 AE Eindhoven (NL); XIAO, Weimin, 5656 AE Eindhoven (NL)
(74) Representative: Vollering, Stefanus Franciscus Maria

(57) **Abstract**

In an embodiment, a cooking method (100) is described. The method comprises receiving (102) first image data corresponding to a view associated with a food item at a first time of a cooking process implemented by a cooking apparatus. The method further comprises receiving (104) second image data corresponding to a view associated with the food item at a second time of the cooking process. The method further comprises comparing (106) the first image data with the second image data to detect an indication of liquid loss from the food item between the first time and the second time as a result of the cooking process. In response to the detected liquid loss being indicative of a transition from a first phase to a second phase of the cooking process where liquid loss as a result of the cooking process occurs at a higher rate during the second phase than the first phase, the method further comprises causing (108) the cooking apparatus to modify the cooking process.

## Description

### TECHNICAL FIELD OF THE INVENTION

The invention relates to a cooking method, a non-transitory machine-readable medium and a cooking apparatus for implementing a cooking process.

### BACKGROUND OF THE INVENTION

Cooking apparatus may implement cooking processes such as roasting, grilling, frying, air frying, etc., to cook food. For example, cooking apparatus such as ovens or air fryers may be used for roasting food. In an example use case, a user may set the cooking temperature of the cooking apparatus while also defining the amount of time that the cooking apparatus is to cook the food (e.g., by setting a timer at which point the cooking apparatus turns off or the user manually removes the food from the cooking apparatus). However, the outcome of the cooking process (e.g., quality of the cooked food, time to cook the food, etc.) may depend on factors such as the user's skill or experience, how closely the user follows a recipe and/or the cooking efficiency of the cooking apparatus. In the example of roasting, a user may set the cooking apparatus to cook at a relatively high temperature, to roast the food within a specified time period. While this high temperature cooking process may cook the food within a relatively short period of time and/or result in food having a desirable flavor, there is a risk of an outcome such as the food being overcooked or less tasty than anticipated.

### SUMMARY OF THE INVENTION

Certain aspects or embodiments described herein may relate to improving the outcome of a cooking process and/or reducing burdens for a user.

In a first aspect, a cooking method is described. The method comprises receiving first image data corresponding to a view associated with a food item at a first time of a cooking process implemented by a cooking apparatus. The method further comprises receiving second image data corresponding to a view associated with the food item at a second time of the cooking process. The method further comprises comparing the first image data with the second image data to detect an indication of liquid loss from the food item between the first time and the second time as a result of the cooking process. In response to the detected liquid loss being indicative of a transition from a first phase to a second phase of the cooking process where liquid loss as a result of the cooking process occurs at a higher rate during the second phase than the first phase, the method further comprises causing the cooking apparatus to modify the cooking process.

Some embodiments relating to the first and other aspects are described below.

In some embodiments, in the first phase, liquid is retained by the food item. In the second phase, liquid may be leached out by the food item.

In some embodiments, the transition from the first phase to the second phase occurs when, during the cooking process, a structure of the food item undergoes a physical change as a result of the cooking process such that liquid is released from the structure.

In some embodiments, the indication of liquid loss comprises a geometric change of the food item.

In some embodiments, the cooking method further comprises detecting the geometric change of the food item by identifying a change in position and/or size of at least part of the food item between the first and second image data.

In some embodiments, the cooking method further comprises identifying the transition from the first phase to the second phase. The transition may be identified by comparing the identified change in position and/or size with a threshold geometrical change value indicative of the transition. In response to the identified change crossing the threshold geometrical change value, the cooking apparatus may be caused to modify the cooking process.

In some embodiments, the cooking method comprises identifying the change in position. The change in position may be identified by: identifying a coordinate in the first image data that corresponds to a region of the food item; identifying a coordinate in the second image data that corresponds to the region of the food item; and identifying the change in position based on a change of the identified coordinate corresponding to the region of the food item between the first image data and the second image data.

In some embodiments, the cooking method comprises identifying the change in size. The change in size may be identified by: identifying a set of coordinates in the first image data that are indicative of a dimension of the food item at the first time; identifying a set of coordinates in the second image data that are indicative of the dimension of the food item at the second time; and identifying the change in size based on a change of identified coordinates between the first and second image data.

In some embodiments, the indication of liquid loss comprises a change in an amount of visible liquid on a surface of the food item and/or on a support surface for the food item.

In some embodiments, the cooking method comprises using a surface liquid detection model to detect, between the first and second image data, the change in the amount of visible liquid on the surface of the food item and/or on the support surface for the food item.

In some embodiments, the surface liquid detection model is configured to identify the transition from the first phase to the second phase. The transition may be identified by comparing the identified change in the amount of liquid on the surface of the food item and/or on the support surface with a threshold liquid change value indicative of the transition. The method may further comprise causing the cooking apparatus to modify the cooking process in response to the identified change crossing the threshold liquid change value.

In some embodiments, where there is a plurality of food items to be cooked, the cooking method comprises causing the cooking apparatus to modify the cooking process in response to identifying when, during the cooking process, a predefined number or proportion of the plurality of food items are associated with detected liquid loss indicative of the transition from the first phase to the second phase of the cooking process.

In some embodiments, the cooking method comprises receiving data indicative of a type of the food item received by the cooking apparatus for cooking. The method may further comprise causing the cooking apparatus to apply heat at a first target temperature. In response to the detected liquid loss being indicative of the transition from the first phase to the second phase of the cooking process, the method may further comprise causing the cooking apparatus to apply heat at a second, reduced, target temperature. The indication of the liquid loss detected during the cooking process may be compared with a predefined threshold change value based on the type of the food item. The predefined threshold change value may be indicative of the transition from the first phase to the second phase of the cooking process.

In a second aspect, a non-transitory machine readable medium is described. The non-transitory machine readable medium stores instructions which, when executed by processing circuitry, cause the processing circuitry to implement the cooking method of any of the first aspect or related embodiments.

In a third aspect, a cooking apparatus is described. The cooking apparatus is for implementing a cooking process. The cooking apparatus comprises a cooking chamber for receiving a food item. The cooking apparatus further comprises a housing defining the cooking chamber. The cooking apparatus further comprises an air circulation system for circulating air flow inside the cooking chamber. The cooking apparatus further comprises a camera for capturing images during the cooking process. The cooking apparatus further comprises a controller. The controller is configured to receive first image data corresponding to a view associated with a food item at a first time of a cooking process implemented by the cooking apparatus. The controller is further configured to receive second image data corresponding to a view associated with the food item at a second time of the cooking process. The controller is further configured to compare the first image data with the second image data to detect an indication of liquid loss from the food item between the first time and the second time as a result of the cooking process. In response to the detected liquid loss being indicative of a transition from a first phase to a second phase of the cooking process where liquid loss as a result of the cooking process occurs at a higher rate during the second phase than the first phase, the controller is further configured to cause the cooking apparatus to modify the cooking process.

Certain aspects or embodiments described herein may provide various technical benefits such as reducing the amount of liquid lost from food during a cooking process, which may help to improve an outcome of the cooking process. In this manner, certain aspects or embodiments described herein may lead to an improved outcome such as improved food quality (e.g., food flavor, texture, juiciness, etc.), reduced cooking time compared with low temperature cooking processes and/or reduced cleaning or maintenance of cooking surfaces, among other benefits such as referred to herein.

These and other aspects of the invention will be apparent from and elucidated with reference to the embodiment(s) described hereinafter.

### BRIEF DESCRIPTION OF DRAWINGS

Exemplary embodiments of the invention will now be described, by way of example only, with reference to the following drawings, in which:
Figure 1 refers to a cooking method according to an embodiment;
Figure 2 is a schematic drawing of a cooking ecosystem according to an embodiment;
Figure 3 is a schematic drawing of a cooking apparatus for implementing a cooking process according to an embodiment;
Figure 4 is a graph representative of a cooking process implemented according to various embodiments;
Figures 5(a)-(b) schematically depict images of a food item during a cooking process;
Figure 6 refers to a cooking method according to an embodiment;
Figure 7 refers to a cooking method according to an embodiment;
Figures 8(a)-(b) schematically depict images of a food item during a cooking process;
Figure 9 refers to a cooking method according to an embodiment;
Figure 10 refers to a cooking method according to an embodiment;
Figure 11 refers to a cooking method according to an embodiment;
Figure 12 is a schematic drawing of a machine-readable medium for implementing various embodiments; and
Figure 13 is a schematic drawing of apparatus for implementing various embodiments.

### DETAILED DESCRIPTION OF THE EMBODIMENTS

As referred to herein, a "cooking process" refers to applying heat to a food item to cause a change in the food item. Such application of heat may result in a mere warming of the food item, or a more substantial change in the food item such as may be achieved by using cooking methods such as roasting, grilling, frying, air frying, etc.

As referred to herein, a "cooking apparatus" refers to any device capable of applying heat to a food item, in order to complete the cooking process as referred to above. Heat may be applied to the food item by the cooking apparatus in one or multiple ways such as by conduction, convection or radiation. Examples of cooking apparatus include: an oven, microwave oven, hob, air fryer, etc.

Cooking apparatus such as air fryers may be conveniently used for roasting food such as meat, fish and vegetables. To create a delicious taste and reduce the cooking time, the roasting temperature may be set at 180°C, or higher. Increasing the cooking temperature may reduce the time for the cooking process to complete. In addition, such high temperature roasting may result in the food having a desirable flavor. For example, a user may prefer the flavor of meat, fish or vegetables roasted at a high temperature compared with meat, fish or vegetables roasted at a lower temperature, or cooked using a different cooking process such as boiling.

However, food such as meat, fish and vegetables may have a high liquid content (e.g., water, lipids and/or proteins that may be released from the food in liquid form during the cooking process). Such food may comprise structures which, when heated, undergo physical changes resulting in the release of liquid during the cooking process. For example, muscle fibers may shrink or break, proteins may become denatured, collagen may dissolve, fats may melt, etc., as a result of the cooking process.

Raw meats and seafood may have high water content. Some of this water content may contribute to the "juiciness" of the meat. However, the cooking process may reduce the juiciness of the meat. For example, some water may be stored in spaces between protein filaments of the muscle fibers, as well as around the muscle fibers. During the cooking process, some proteins may denature such that the core of the muscle fibers may collapse and shrink. As the cooking process continues, juice (i.e., water in combination with any other components dissolved or otherwise mixed with the water such as sugars, salts, protein components, lipids, etc.) may be squeezed out from within and around the muscle fibers. The juice released by this process may combine with oil/fats released from other structures in the meat as a result of the cooking process. The liquid leached out from the meat may be considered "free" liquid. However, some "trapped" liquid may be left behind after completion of the cooking process. Trapped liquid may not necessarily provide the desired juiciness since it may be trapped by gel-form proteins or otherwise bound to various components of the cooked meat.

In an example, a significant amount of liquid may be released from the various structures of the meat as a result of the cooking process when the temperature of the meat exceeds 65 °C. As the cooking process continues, "free" liquid may be released, leaving behind "trapped" liquid. For example, by the time the meat reaches a temperature of 85 °C, collagen shrinkage may have released most of the "free" liquid leaving behind mostly "trapped" liquid. Therefore, the meat may be considered dry and/or tough at this point.

Similarly, structures in vegetables such as cells storing high-water content liquid may shrink or become broken during the cooking process to release the liquid therefrom, which may lead to vegetables shrinking and/or becoming dryer during the cooking process.

Thus, certain liquid released from food during the cooking process may make the food dry, hard, less juicy, less tasty, etc.

A cooking process called "low temperature roasting" (where the cooking temperature may be lower than 100°C) may be used to retain as much liquid as possible in the food (e.g., to reduce leaching out of the liquid). However, the low temperature roasting method increases the time to cook the food, compared with the high temperature roasting method. In addition, there may be cases where food cooked using the low temperature roasting method may be considered to be less tasty than food cooked using the high temperature roasting method. Similar issues may exist with other cooking processes such as grilling, barbequing, etc.

In some cases, certain liquid such as oil/fat released from the food may become baked on to a cooking surface as "grease". Over time, the accumulation of the baked-on grease may make cleaning rather difficult. There are many cleaning materials in the market and many tips on how to clean baked-on grease. However, this may not be convenient for a consumer due to the extra attention and time needed for consumers to clean the cooking surface.

The release of liquid (which may also be referred to as "leach-out") during the cooking process may therefore cause various issues such as relating to the final quality of the cooked food and/or burdens for a user implementing the cooking process.

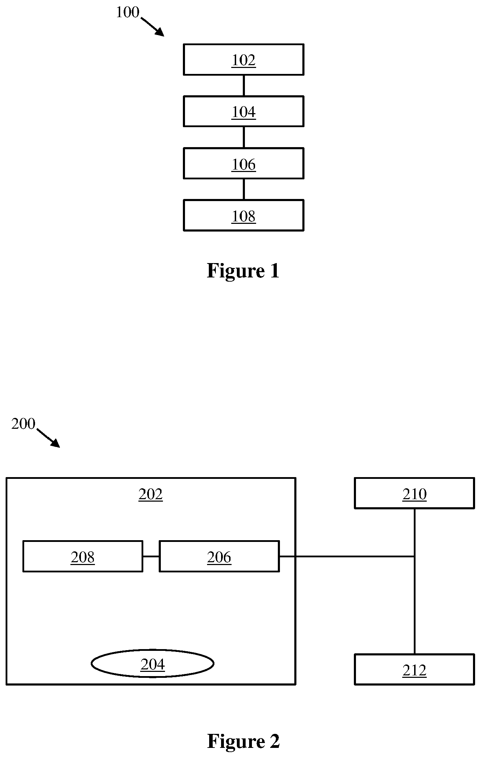

Figure 1 refers to a cooking method 100 according to an embodiment. The cooking method 100 may be used for controlling a cooking process implemented by a cooking apparatus. The cooking method 100 may be computer-implemented (e.g., using processing circuitry of an entity such as referred to in certain systems described below).

The cooking method 100 comprises, at block 102, receiving first image data corresponding to a view associated with a food item at a first time of a cooking process implemented by a cooking apparatus.

The cooking method 100 further comprises, at block 104, receiving second image data corresponding to a view associated with the food item at a second (later) time of the cooking process.

In some cases, the first and/or second image data may correspond to or may be derived from imaging data captured by a camera (e.g., a camera of the cooking apparatus itself or a camera as a separate entity to the cooking apparatus). Such a camera may be positioned inside the cooking apparatus itself or outside the cooking apparatus but with a region of interest associated with the food item in a "field of view" of the camera.

In some cases, such first and/or second image data may correspond to the raw imaging data captured by the camera. In some cases, such first and/or second image data may comprise processed imaging data (e.g., compressed imaging data, enhanced imaging data, etc., derived from the raw imaging data).

The "view associated with the food item" may refer to a region of interest associated with the food item in a "field of view" of the camera. In some cases, at least part of the food item may be visible in the view of the camera. In some cases, the food item may not be visible in the view. In this latter case, the "region of interest" may refer to an area around the food item which may be of interest for various reasons as described herein. In either case, the first and second image data may provide information about the food item at the first and second times, respectively, which may be used in the cooking method 100 as further described below.

The cooking method 100 further comprises, at block 106, comparing the first image data with the second image data to detect an indication of liquid loss from the food item between the first time and the second time as a result of the cooking process.

In response to the detected liquid loss being indicative of a transition from a first phase to a second phase of the cooking process where liquid loss as a result of the cooking process occurs at a higher rate during the second phase than the first phase, the cooking method 100 further comprises, at block 108, causing the cooking apparatus to modify the cooking process.

As highlighted above, the cooking process may lead to various physical changes in the food item leading to liquid loss from the food item. The comparison of the first and second image data may yield information about a physical change of the food item that may provide the "indication of liquid loss". For example, in some embodiments, a geometric change of the food item between the first and second times may provide the indication of the liquid loss. In some embodiments, visible leached-out liquid from the food item may provide the indication of the liquid loss.

The timing of the transition from the first phase to the second phase may depend on various factors such as the type of food item being cooked, efficiency of the cooking process, size of the food, cooking recipe being followed, etc. Further, the transition from the first phase to the second phase may not be instantaneous. For example, different parts of the food item may reach a certain temperature at different times (e.g., the core of the food item may take longer to cook than the surface of the food item). Further, different parts of the food item may respond to heat differently (e.g., predominantly fatty structures may release liquid at a different temperature to predominantly water and/or protein-based structures).

For a period of time after the cooking process has started, there may be little or no liquid loss. The "first phase" may comprise this period of time with little or no liquid loss. During the first phase, the core temperature of the food item may be relatively low such that the structures in the core of the food item do not undergo any substantial physical changes leading to the release of liquid therefrom.

However, as the food item cooks, various physical changes may occur which may be associated with an increase in the rate of liquid loss. This increased rate of liquid loss may occur during the "second phase". There may still be some liquid loss during the first phase. However, the rate of liquid loss in the second phase may be substantially increased compared with the first phase. After the second phase, a further "third" phase may occur where the rate of liquid loss decreases again (e.g., when most of the free liquid has been released to leave behind the trapped liquid).

Some example models (implemented by the processing circuitry as part of a cooking method) for identifying the transition based on the comparison are described below. In each example model, the comparison of the first and second image data may provide information indicative of the rate of liquid loss. In some cases, the identification of the transition may be based on identifying when, during the process, the rate of liquid loss is indicative of a threshold being crossed where the threshold is indicative of the transition.

Such a threshold may depend on a cooking factor such as the type of food item being cooked, efficiency of the cooking process, size of the food, cooking recipe being followed, etc. In some cases, a cooking study may have been carried out to determine the rate of liquid loss over time for a certain type of food item, as well as establishing how this liquid loss affects the final quality of the food item. Thus, the cooking study may provide information for use in selecting the threshold. However, in some cases, a study may not be used for selecting the threshold. For example, some models may regard the transition as occurring when the indication of liquid loss is first detected during the cooking process (thus the threshold is when liquid loss is first detected). In another example, some models may regard the transition as occurring based on when a physical change is identified and quantified, such as a reduction in the size of the food item by a predefined threshold.

In an example model, a comparison of the first and second image data may yield information indicating a proportion of liquid has been lost from the food item as a result of the cooking process. The example model may be configured to determine (e.g., estimate, quantify, etc.) a proportion of the liquid that has been lost from the food item between the first and second times. Various ways this information can be established are described below. The identification of the transition may be based on when the comparison indicates that a threshold proportion of liquid has been lost from the food item. As highlighted above, the threshold may be based on a cooking factor.

In another example model, if the amount of liquid lost can be quantified within a set of equal time intervals, it may be possible to detect when the transition occurs based on when the rate of detected liquid loss crosses the threshold. In this regard, the example model may be configured to determine (e.g., estimate, quantify, etc.) how much liquid has been lost from the food item during each time interval. A comparison of first and second image data associated with a first time interval may yield information indicating an estimate or other indication of an amount of liquid lost during the first time interval. A comparison of first and second image data associated with a second, subsequent, time interval may yield information indicating an estimate or other indication of an amount of liquid lost during the second time interval. If the amount of liquid lost is the same or does not significantly increase in each of the first and second time intervals, then this may indicate that the transition has not occurred. However, if the amount of liquid lost increases in the second interval (e.g., increases by a threshold value), then this may indicate that the transition has occurred.

In another example model, a comparison of the first and second image data may indicate that a specified part of the food item (e.g., the core of the food item) has reached a threshold temperature associated with the transition. In this regard, the example model may be configured to identify the transition based on predetermined information indicating a relationship (e.g., based on a cooking factor) between an expected core temperature for a specified degree of liquid loss. In other words, the predetermined information may be used by the model to estimate the core temperature of the food item based on the amount liquid loss detected.

In these example models, a computer-based visual analysis of the first and second imaging data may be used to detect the indication of liquid loss. In response to the detected liquid loss being indicative of the transition from the first phase to the second phase, the cooking process may be modified.

A possible modification of the cooking process may involve reducing the cooking temperature. For example, the high temperature roasting method may be used in the first phase. Subsequently, a lower temperature roasting method may be used in the second phase.

Another possible modification of the cooking process may involve another change that may reduce the rate of liquid lost in the second phase. For example, a change of any setting of the cooking apparatus (such as a change of air circulation speed, etc.) that may otherwise slow down the cooking process may be used.

The cooking method 100 may therefore cause the cooking apparatus to modify the cooking process by implementing any of such possible modifications. In this regard, the cooking method 100 may cause a controller of the cooking apparatus to change its setting. For example, the cooking method 100 may cause a signal to be sent to the controller to cause the controller to e.g., reduce the cooking temperature.

The implementation of certain embodiments described herein such as the cooking method 100 may address at least one of the various issues described above. For example, the cooking method 100 may reduce the amount of liquid lost from food during a cooking process e.g., compared with some high temperature methods which may otherwise lead to excessive loss of liquid during the cooking process. Certain embodiments described herein may lead to an improved outcome such as improved food quality (e.g., food flavor, texture, juiciness, etc.), reduced cooking time compared with low temperature cooking processes and/or reduced cleaning or maintenance of cooking surfaces.

Figure 2 is a schematic drawing of a cooking ecosystem 200 according to an embodiment. Certain embodiments described herein (e.g., cooking method 100) may be implemented in certain parts of the cooking ecosystem 200. The cooking ecosystem 200 depicts various devices and entities which may be deployed as part of the cooking ecosystem 200. Not every device or entity depicted may be needed in some scenarios, as explained below.

The cooking ecosystem 200 comprises a cooking apparatus 202 for cooking a food item 204. The cooking apparatus 202 comprises a controller 206 for controlling the cooking process. For example, the controller 206 may control a heating element (not shown) of the cooking apparatus 202 (e.g., to control the cooking temperature of the cooking apparatus 202). The controller 206 is communicatively coupled to a camera 208 for capturing images. The camera 208 is positioned such that a region of interest associated with the food item 204 is within a field of view of the camera 208. This particular configuration is an example. For example, as already explained, the camera 208 may or may not be inside the cooking apparatus 202.

In some cases, the cooking ecosystem 200 comprises a cloud computing service 210 communicatively coupled to the controller 206. A cloud computing service 210 may provide data storage and/or data processing services. The cloud computing service 210 may provide computing resource where there is insufficient computing resource available in any connected devices. In some cases, the cloud computing service 210 may provide updates and other services for the cooking apparatus 202.

In some cases, the cooking ecosystem 200 comprises a user equipment 212 communicatively coupled to the controller 206. A user equipment 212 may refer to any computing device associated with a user (e.g., of the cooking apparatus 202). Examples of user equipment 212 include: a smartphone, smartwatch, tablet, Internet of Things (IoT) device, etc. In some cases, the user equipment 212 may be communicatively coupled to the cloud computing service 210.

Any one or combination of the controller 206, cloud computing service 210 and the user equipment 212 may be used to implement the cooking method 100 and other embodiments described herein. For example, in some cases, the controller 206 may implement the cooking method 100 and related embodiments. In this regard, the controller 206 may comprise processing circuitry (not shown) for implementing the cooking method 100 and related embodiments. In other cases, processing circuitry associated with the various devices and entities of the cooking ecosystem 200 may implement the cooking method 100 and related embodiments.

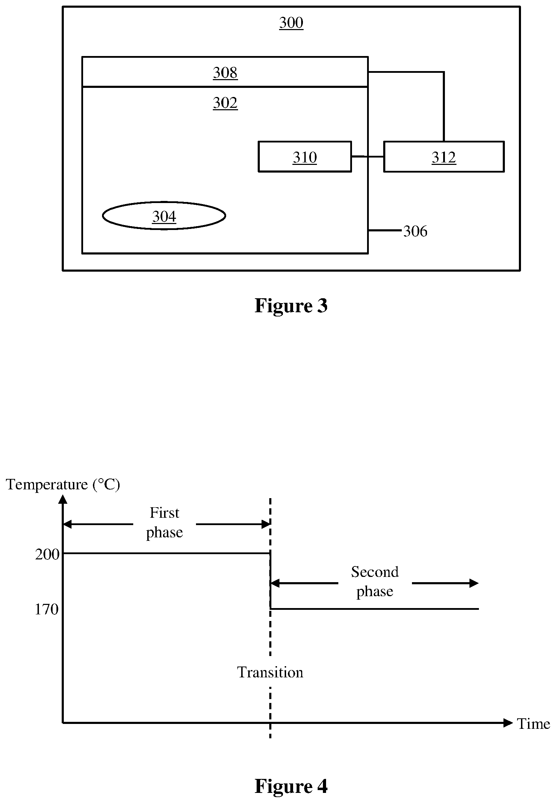

Figure 3 is a schematic drawing of a cooking apparatus 300 for implementing a cooking process according to an embodiment. The cooking apparatus 300 may implement the functionality of certain embodiments described herein such as described in relation to the cooking method 100 of Figure 1. Certain features of the cooking apparatus 300 may correspond to or have similar functionality to features of the cooking apparatus 202 of Figure 2.

The cooking apparatus 300 comprises a cooking chamber 302 for receiving a food item 304. The cooking apparatus 300 further comprises a housing 306 defining the cooking chamber 302. The cooking apparatus 300 further comprises an air circulation system 308 for circulating air flow inside the cooking chamber 302. Therefore, in this regard, the cooking apparatus 300 may have a similar form to a fan oven or an air fryer. The cooking apparatus 300 further comprises a camera 310 for capturing images (of the "view" associated with the food item 304) during the cooking process. The captured images may correspond to or be used to derive the first and second image data.

The cooking apparatus 300 further comprises a controller 312 such as corresponding to the controller 206 of Figure 2. In this embodiment, the controller 312 is configured to implement the cooking method 100.

Thus, the controller 312 is configured to receive first image data corresponding to a view associated with a food item 304 at a first time of a cooking process implemented by the cooking apparatus 300 (in accordance with block 102).

The controller 312 is further configured to receive second image data corresponding to a view associated with the food item 304 at a second time of the cooking process (in accordance with block 104).

The controller 312 is further configured to compare the first image data with the second image data to detect an indication of liquid loss from the food item 304 between the first time and the second time as a result of the cooking process (in accordance with block 106).

In response to the detected liquid loss being indicative of a transition from a first phase to a second phase of the cooking process where liquid loss as a result of the cooking process occurs at a higher rate during the second phase than the first phase, the controller 312 is further configured to cause the cooking apparatus 300 to modify the cooking process (in accordance with block 108).

Although Figure 3 describes that the controller 312 of the cooking apparatus 300 implements the cooking method 100, in some cases, other devices or entities (such as depicted by Figure 2) may implement at least some of the functionality of the cooking method 100 (and related embodiments).

Figure 4 is a graph representative of a cooking process implemented according to various embodiments. In the first phase of the cooking process, a cooking apparatus such as described above, is set to cook at a first temperature (for example, 200 °C). Upon identification of the "transition" as described herein (at the start of the "second phase"), the cooking process is modified by reducing the cooking temperature to a second, lower, temperature (for example, 170 °C). This cooking process may facilitate an initial high temperature cooking phase (e.g., to reduce overall cooking time, reduce the rate of food shrinkage and/or improve taste) while reducing the effect of certain issues arising from excessive liquid leach-out (e.g., reduced juiciness, excessive shrinkage, etc.) or burdens for the user (e.g., having to clean oil/fat spillage).

In some cases, the first phase may be referred to as a "no leach-out" phase and the second phase may be referred to as a "leach-out" phase. The transition may be detected based on a "smart" visual method, in accordance with various embodiments described herein.

Various implementations of the cooking method 100 and related embodiments are described below in the context of the cooking method of roasting. Similar principles may apply to other cooking methods.

The roasting procedure may be differentiated based on a "leach-out status" of the food item. In some cases, there are at least two phases: a "no leach-out roasting phase" (the first phase) and a "leach-out roasting phase" (the second phase).

The transition of these roasting phases may be made dynamically by processing circuitry (e.g., implementing a "smart" leach-out phase detection module) for implementing the cooking method 100. For example, the processing circuitry may be configured to detect the start of the leach-out phase based on the images captured by the camera 310.

In some cases, the processing circuitry may be configured to detect a visual geometry change or change rate of the food item 304 based on image/video analysis (e.g., based on the comparison of the first and second image data) in the first phase of the cooking process (for example, within a period of time 0 to 8 minutes for some food items). In this first phase, the cooking strategy is suitable for the "no leach-out roasting phase".

When the change in geometry or a change rate reaches a threshold (the threshold may be pre-set for a model, as referred to previously), the processing circuitry may cause the cooking apparatus 300 to switch to the cooking strategy for the "leach-out roasting phase". For the "leach-out roasting phase", the cooking apparatus 300 may apply a lower cooking temperature than the initial roasting phase (e.g., at least 10 °C lower than the cooking temperature used for the "no leach-out roasting phase").

The timing of the transition (i.e., when the "leach out roasting phase" starts) may be a parameter used by the cooking apparatus 300 to judge when the food item 304 may be completely cooked. For example, it may take a further specified period of time after the transition to complete roasting of the food item 304. The cooking apparatus 300 may then reduce the temperature or turn off to slow down or stop the cooking process.

In one possible implementation, the comparison of the first and second image data may yield information regarding geometry changes of the food item 304. Such geometry changes may provide the indication of the liquid loss. A threshold geometry change may be indicative of the transition. In this implementation, a detection model (implemented by the processing circuitry) may detect the position of food item's four external "tip" points (e.g., the top, bottom, left and right maximum external tip point within the field of view of the camera 310). Within equal time intervals (e.g., every 1 minute), the comparison of the image data may provide information indicative of any changes to the position of the four external tip points (e.g., by tracking the position of the tip points within the field of view). After a certain period, e.g., 2 time intervals of detection, the detection model may select which of these tip points has moved by the most (indicative of shrinkage of the food item 304). The detection model may continue detecting movement of the selected tip point for each time interval. When the change in position of the tip interval reaches a threshold for this type of food item 304 (and/or based on another food factor), this indicates that the leach-out roasting phase has started (i.e., the transition has occurred). Further details of this possible implementation are described below.

In another possible implementation, the comparison of the first and second image data may yield information regarding a visible area change (e.g., in term of pixels) of the food item 304 within each time interval. For example, a detection model (implemented by the processing circuitry) may be configured to detect the area of the food item 304 (e.g., based on a segmentation model or other approach). A change of the area may be indicative of shrinkage, and hence provide the indication of liquid loss. A threshold area change specified by the model for the food item 304 may indicate when the transition occurs during the cooking process. Further details of this possible implementation are described below.

In another possible implementation, the comparison of the first and second image data may yield information regarding visible leach-out liquid. For example, a detection model (implemented by the processing circuitry) may be configured to detect the leach-out liquid that is visible to the camera 310 (e.g., based on a segmentation model or other approach such as monitoring for changes in reflectance in a region of interest). In this regard, there may be visible liquid on the surface of the food item 304 itself or around the food item 304 on a "support surface" such as a baking tray, plate or a layer of aluminum foil under the food item 304. Depending on the detection model, the comparison may be based on a part of the image data corresponding to the food item 304 itself or in a region of interest around the food item 304. This implementation may be standalone or may be used to assist other implementations such as described above. Further details of this possible implementation are described below.

If there are a plurality of food items 304 in the cooking apparatus 300, various different cooking strategies may be used to identify the transition (since the transition may occur at different times for different food items 304). In some cases, the strategy may comprise regarding the transition as occurring when detecting the first food item 304 that has a geometry change that crosses the threshold. In some cases, the strategy may comprise regarding the transition as occurring when detecting the second one, third one, final one etc., of the food items 304 that each have a geometry change that crosses the threshold.

Some embodiments relating to the above are now described.

In some embodiments, in the first phase, liquid is retained by the food item 304. In the second phase, liquid is leached out by the food item 304. In such embodiments, there may be a distinct point where the start of liquid leach out is detected, after which the cooking process may be modified. In other embodiments, there may not be such a distinct change. For example, the rate of change of liquid loss may substantially increase in the second phase compared with the first phase. However, some liquid loss may still occur in the first phase.

In some embodiments, the transition from the first phase to the second phase occurs when, during the cooking process, a structure of the food item 304 undergoes a physical change as a result of the cooking process such that liquid is released from the structure. The "structure" could be any region of the food item 304 storing matter that may undergo a change resulting in release of liquid during the cooking process, such as described above.

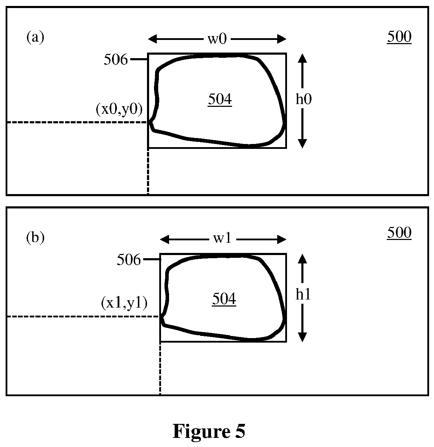

Figures 5(a)-(b) schematically depict images 500 of a food item 504 during a cooking process implemented by a cooking apparatus such as described above. In Figures 5(a)-(b), the food item 504 is bounded by a rectangular box 506 fitted to the maximum tip points (top, bottom, left, right) of the food item 504 at the first and second times, respectively.

In this case, the coordinate of the left tip point is represented by the coordinate (x0, y0) in Figure 5(a) and coordinate (x1, y1) in Figure 5(b). It can be seen that due to the particular shape of the food item 504, this region of the food item 504 (defined by the coordinate) can be used as a reference for determining how the geometry of the food item 504 has changed. As depicted, shrinkage of the food item 504 as a result of the cooking process has caused the region of the food item 504 to move within the field of view. Since the coordinates may be determined from the pixel identifiers, it is possible to determine by how many pixels the region has moved. A threshold number of pixels (or distance) can be set for the food item 504 such that when the threshold is crossed, this may indicate occurrence of the transition.

Figures 5(a)-(b) also indicate another way to determine the indication of liquid loss. In this regard, the width (w0) and height (h0) at the first time can be determined based on the dimensions of the rectangular box 506 in Figure 5(a). The width (w1) and height (h1) at the second time can be determined based on the dimensions of the rectangular box 506 in Figure 5(b). Thus, a change in width and/or height of the rectangular box 506 may be determined from the comparison. If the change crosses a predefined threshold for the food item 504, this may indicate occurrence of the transition.

Another way to determine the indication of liquid loss based on the images 500 depicted by Figures 5(a)-(b) may be to compare the area of the food item 504 at the first and second times. A threshold area may be defined to indicate occurrence of the transition.

Some of these methods may be computationally simple/light-weight to implement. For example, a relatively light-weight detection model may be used to detect the tip points or size of the rectangular box 506. In another example, a segmentation model may be implemented to distinguish between pixels corresponding to the food item 504 and non-food item pixels.

In some cases, any of these detection models could be implemented by a machine learning (ML) model (e.g., trained to detect the tip points, perform segmentation, etc.).

In some cases, any of these detection models could be implemented by a deterministic, classical or non-ML model (e.g., based on analyzing pixel intensity/color values across the images where a step change in pixel intensity/color value may indicate an edge of the food item 504).

Therefore, in some embodiments, the indication of liquid loss comprises a geometric change of the food item 304.

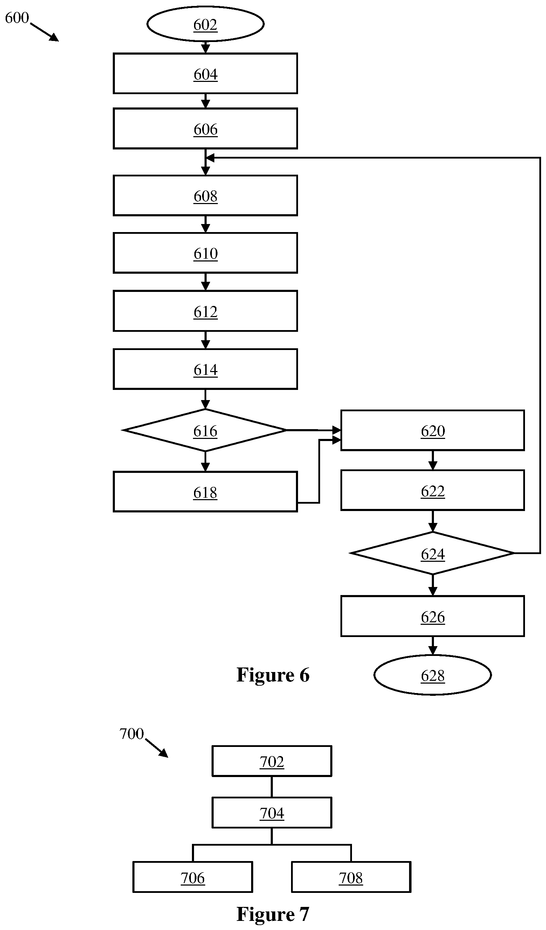

Figure 6 is a flowchart 600 referring to a cooking method for detecting the transition according to an embodiment. The flowchart 600 refers to an implementation similar to or corresponding to the detection model described above where a change in coordinate of a food item tip point may be used to provide the indication of the liquid loss. In this regard, the processing circuitry referred to previously may implement the flowchart 600. As described in more detail below, the flowchart 600 refers to blocks implementing the functionality of certain embodiments described herein such as the cooking method 100 and certain related embodiments. In some embodiments, certain blocks may be omitted or implemented in a different order to that depicted, as described in more detail below.

The flowchart 600 starts at block 602.

In some embodiments, at block 604, the processing circuitry may receive the information about the food item 504 and/or a recipe to be followed for the cooking process. Such information may be input by a consumer (e.g., via the cooking apparatus 202, 300 itself or the user equipment 212) or by an automatic food recognition function based on the captured images. The information may not always be needed. For example, the functionality of certain embodiments may still be implemented without such information.

At block 606, some initial parameters may be set e.g., based on certain cooking factors such as the type of food item/recipe to be followed. Examples of initial parameters that could be set include at least one, and any combination, of the following parameters A to D. Parameter "A" may be t = 0, where "t" is cooking time. Parameter "B" may be "t_interval", the time interval for capturing images or video clips to analysis food geometry change. For example, t_interval may be set at 1 minute or any other appropriate time. In this example, a new image of the food item 504 captured every 1 minute may be received. Each new image may be compared with the preceding image and/or the first-captured image to detect any indication of liquid loss from the food item 504. Parameter "C" may be "d_threshold", a distance threshold used for determining whether a geometry change of the food item 504 compared with its initial geometry is indicative of occurrence of the transition. The distance threshold may be based on a cooking factor such as the type of food item 504. Parameter D may be "t", the heating temperature for the first phase. The heating temperature could be set by the consumer or by the cooking apparatus (e.g., a predefined temperature for the food item 504 being cooked).

At block 608, images of the food item 504 are captured at time "t" at each "t_interval". Such images may correspond to or be used to derive the first and second image data referred to in the cooking method 100. The "first image data" may refer to an image captured prior to capture of an image corresponding to the second image data. Depending on the model, the "comparison" may be made between images acquired at regular intervals or may be made between an image captured at time, t, with an image captured at time t=0.

At block 610, the food item 504 is segmented from the background (e.g., using a segmentation model).

At block 612, an edge of the food item 504 is detected by image processing (e.g., using an edge detection model). The edge detection model may be configured to detect the "tip points" of the food item 504 based on the information in the image data. For example, the region of the detected food item 504 closest to the top of the image frame may be regarded as the "top" tip point. A similar principle may be applied to the "bottom", "left" and "right" tip points with respect to the bottom, left and right of the image frame, respectively.

At block 614, a frame corresponding to the rectangular box 506 intersecting each of the tip points is generated. The position of the corners (top-left, top-right, bottom-left and bottom-right) of the rectangular box 506 may be defined by x-axis ("X") and y-axis ("Y") coordinates as follows: X_top-left, Y_top-right, X_bottom-left, Y_bottom-right. With reference to Figure 5, it can be recognized that these coordinates may be used to determine the geometry change of the food item 504 between the first and second times.

At block 616, a check is made whether the food item 504 is raw (i.e., if t=0) or is not raw/cooking has started (i.e., t>0).

If the food item 504 is raw (i.e., at t=0, or "yes"), the flowchart 600 proceeds to block 618 where the values of the x- and y-axis coordinates described above may define a reference frame to be used as benchmark to calculate the geometry change as the cooking process continues.

If the food item 504 is not raw or cooking has started (i.e., t>0, or "no"), at block 620, the present time, t, is added with the parameter, "t_interval".

At block 622, the change in coordinate corresponding to a distance "d" is calculated. For example, the detected distance "d" may correspond to the maximum distance between (x1,y1) and (x0,y0) in Figure 5. Since the coordinates may be based on pixel values, this may not correspond to an actual distance moved by the region of the food item 504. Rather, the distance "d" may represent a magnified or de-magnified value with respect to the actual distance moved, depending on the set-up of the camera 310.

At block 624, at determination is made regarding whether or not "d_threshold" has been crossed.

If the detected distance "d" crosses (e.g., meets or exceeds) "d_threshold" (i.e., "yes"), the flowchart 600 proceeds to block 626 where the controller 312 may cause the cooking apparatus 600 to modify the cooking process (for the second phase), whereupon the flowchart 600 ends at block 628.

However, if the detected distance "d" does not cross "d_threshold" (i.e., "no"), the flowchart 600 proceeds to block 608 (e.g., to capture a further image at the next time interval).

An example implementation of the flowchart 600 is now described in an experiment that involved roasting salmon. During the experiment, the salmon shrunk during the first phase of the cooking process, during which the salmon was roasted at 180 °C. It was observed that the "tip points" of the salmon changed position during roasting. Based on detecting the pixel coordinates corresponding to each tip point of the salmon, it was observed that the movement of the tip point exceeded the predefined threshold distance of 8 pixels after 3 minutes of roasting. This threshold distance was considered to represent the start of the second phase. The cooking process was then automatically modified for the second phase by reducing the heating temperature to 160 °C. The cooking process continued for 15 minutes until the salmon was cooked. The length of time of the second phase could be based on a predefined time or could be controlled based on the detecting a threshold color change (e.g., browning of the surface of the salmon).

In a similar experiment that involved roasting chicken wings, the initial temperature was 190°C for the first phase. Similarly, it was observed that the movement of one of the tip points of the chicken exceeded the predefined threshold distance of 8 pixels after 3 minutes of roasting. In this experiment, multiple chicken wings were cooked. The first chicken wing that had a tip point that exceeded the threshold distance was considered to provide the time of the transition. The cooking process was then automatically modified for the second phase by reducing the heating temperature to 170 °C. The cooking process continued for 15 minutes until the chicken was cooked. Again, the length of time of the second phase could be based on a predefined time or could be controlled based on the detecting a threshold color change (e.g., browning of the surface of the chicken).

Figure 7 refers to a cooking method 700 according to an embodiment. The cooking method 700 may be based on embodiments where the indication of liquid loss comprises a geometric change of the food item 504 (e.g., such as described in relation to Figures 5 to 6, to which reference may be made). The cooking method 700 may be implemented by the same processing circuitry for implementing the cooking method 100 and any related embodiments. In some embodiments, certain blocks of the cooking method 700 may be omitted or performed in a different order to that shown, as described in more detail below.

The cooking method 700 comprises, at block 702, detecting the geometric change of the food item 504 by identifying a change in position and/or size of at least part of the food item between the first and second image data.

In some embodiments, the cooking method 700 comprises, at block 704, identifying the transition from the first phase to the second phase by comparing the identified change in position and/or size with a threshold geometrical change value (e.g., "d_threshold" or a threshold width or height of the food item 504) indicative of the transition. In response to the identified change crossing the threshold geometrical change value, the cooking method 700 further causes the cooking apparatus to modify the cooking process.

In some embodiments, the cooking method 700 comprises, at block 706, identifying the change in position by: identifying a coordinate in the first image data that corresponds to a region of the food item; identifying a coordinate in the second image data that corresponds to the region of the food item 504; and identifying the change in position based on a change of the identified coordinate corresponding to the region of the food item 504 between the first image data and the second image data. Block 706 may refer to tracking movement of at least one of the tip points referred to in Figure 5. An identified coordinate of a tip point may correspond to a position of a "max point" in the food contour. The coordinate may correspond to a pixel identifier (e.g., a pixel location) in the image data.

In some embodiments, the cooking method 700 comprises, at block 708, identifying the change in size by: identifying a set of coordinates in the first image data that are indicative of a dimension of the food item 504 at the first time; identifying a set of coordinates in the second image data that are indicative of the dimension of the food item 504 at the second time; and identifying the change in size based on a change of identified coordinates between the first and second image data. "A" dimension may refer to a length/width/height or it could refer to a plurality of dimensions e.g., area or volume. The change may be a change in number of identified coordinates corresponding to the dimension of the food item 504.

Thus, in some cases, block 708 may refer to identifying a change in width, height, depth, area or volume of the food item 504.

In one implementation, the "set of coordinates" may refer to at least two coordinates (e.g., X_top-left, Y_top-right, X_bottom-left, Y_bottom-right, etc.) that are indicative of a dimension such as length or width.

In another implementation, the "set of coordinates" may refer to each of the pixel coordinates between two opposite edges of the food item 504. For example, the maximum distance between the same two opposite edges may be 100 pixels at the first time and 92 pixels at the second time. Thus, the number of identified coordinates has changed between the first and second times.

In another implementation, the "set of coordinates" may refer to the pixels making up the visible area of the food item 504. For example, the total number of pixels corresponding to the area may be 500 pixels at the first time and 450 pixels at the second time. Thus, the number of identified coordinates has changed between the first and second times.

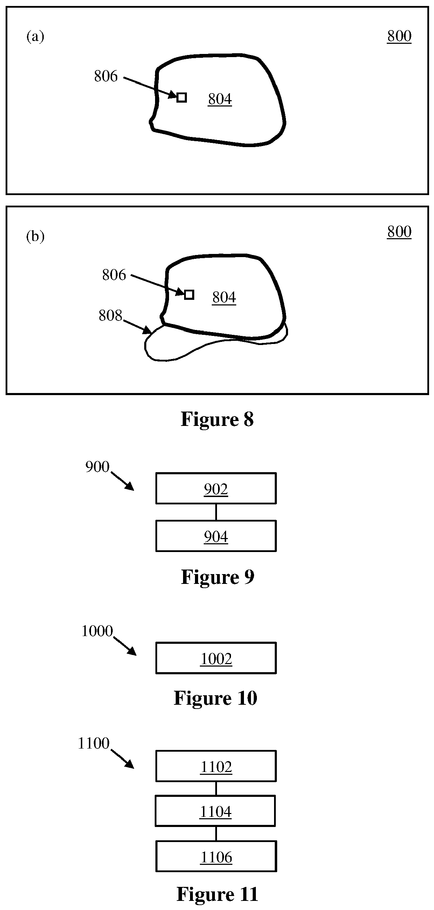

Figures 8(a)-(b) schematically depict images 800 of a food item 804 during a cooking process implemented by a cooking apparatus such as described above. In Figures 8(a)-(b), the food item 804 comprises a food surface region of interest 806 in Figures 8(a) and 8(b) respectively. As further shown by Figure 8(b), leached-out liquid 808 is visible on a support surface for supporting the food item 804. Liquid loss may be detected in either or both of the food surface region of interest 806 and on the support surface. Thus, in some embodiments, the indication of liquid loss comprises a change in an amount of visible liquid on a surface of the food item 804 and/or on a support surface for the food item 804. Certain embodiments may make use of this detectable liquid loss to identify the transition, as described in more detail below.

Figure 9 refers to a cooking method 900 according to an embodiment. The cooking method 900 may be based on embodiments where the indication of liquid loss comprises a change in an amount of visible liquid on a surface of the food item 804 and/or on a support surface for the food item 804 (e.g., such as described in relation to Figure 8, to which reference may be made). The cooking method 900 may be implemented by the same processing circuitry for implementing the cooking method 100 and any related embodiments. In some embodiments, certain blocks of the cooking method 900 may be omitted or performed in a different order to that shown, as described in more detail below.

In some embodiments, the cooking method 900 comprises, at block 902, using a surface liquid detection model to detect, between the first and second image data, the change in the amount of visible liquid on the surface of the food item 804 and/or on the support surface for the food item 804.

The surface liquid detection model may be configured to detect/recognize visible liquid such as based on a change in reflectance or color in a detection area (on the food item 804 itself such as within the food surface region of interest 806 or on the support surface). This could be based on a deterministic method for detecting a change (based on image processing, detecting a change in color values, histogram analysis, etc.) or an ML-based method (e.g., trained to recognize a change in visible liquid such as based on a segmentation model).

In some embodiments, the surface liquid detection model is configured to identify the transition from the first phase to the second phase by comparing the identified change in the amount of liquid on the surface of the food item and/or on the support surface with a threshold liquid change value (e.g., a predefined value for the model) indicative of the transition. The cooking method 900 may further comprise, at block 904, causing the cooking apparatus to modify the cooking process in response to the identified change crossing the threshold liquid change value. In some cases, the transition may be identified as soon as visible liquid is detected by the surface liquid detection model. In some cases, the transition may be identified when a threshold amount of visible liquid is detected by the surface liquid detection model (e.g., based on a change in area, reflectance and/or color, etc.).

Figure 10 refers to a cooking method 1000 according to an embodiment. The cooking method 1000 may be implemented by the same processing circuitry for implementing the cooking method 100 and any related embodiments.

In the cooking method 1000, where there is a plurality of food items 504 to be cooked, a decision is made regarding the timing of the transition in view of the different cooking times of the different food items 504. In this regard, the cooking method 1000 comprises, at block 1002, causing the cooking apparatus 300 to modify the cooking process in response to identifying when, during the cooking process, a predefined number or proportion of the plurality of food items 504 are associated with detected liquid loss indicative of the transition from the first phase to the second phase of the cooking process. The predefined number or proportion may refer to the first food item 504 that undergoes the transition, or a subsequent food item 504 undergoes the transition. The selection of the predefined number or proportion may be based on a previous study regarding which predefined number or proportion delivers an optimum outcome (e.g., reduced liquid loss, maximum flavor, reduced cooking time, etc.).

Figure 11 refers to a cooking method 1100 according to an embodiment. The cooking method 1100 may be implemented by the same processing circuitry for implementing the cooking method 100 and any related embodiments. In the cooking method 1100, the type of food item 504 being cooked is taken into account to control the cooking process.

The cooking method 1100 comprises, at block 1102, receiving data indicative of a type of the food item 504 received by the cooking apparatus 300 for cooking.

The cooking method 1100 further comprises, at block 1104, causing the cooking apparatus 300 to apply heat at a first target temperature (e.g., for the first phase). The first target temperature may be based on the type of the food item and/or any other cooking factor such as described above.

In response to the detected liquid loss being indicative of the transition from the first phase to the second phase of the cooking process, the cooking method 1100 further comprises causing the cooking apparatus 300 to apply heat at a second, reduced, target temperature (e.g., for the second phase).

The indication of the liquid loss detected during the cooking process is compared with a predefined threshold change value based on the type of the food item. The predefined threshold change value may be indicative of the transition from the first phase to the second phase of the cooking process.

The "predefined threshold change value" may correspond to the "threshold geometrical change value" and/or the "threshold liquid change value" referred to above. The target temperature(s) may be: user-specified, predefined based on the type of food item and/or based on a desired cooking result.

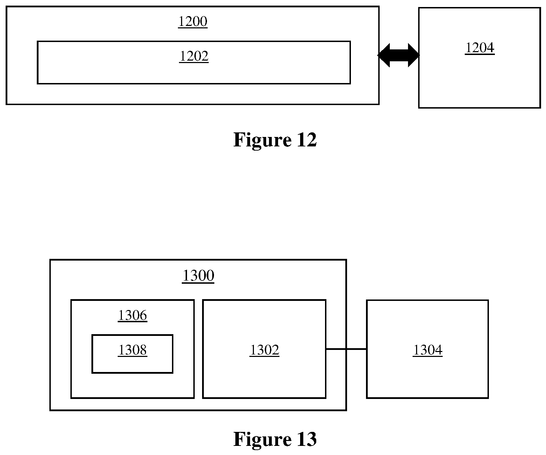

Figure 12 is a schematic drawing of a non-transitory machine-readable medium 1200 for implementing various embodiments described herein. The machine-readable medium 1200 stores instructions 1202 which, when executed by processing circuitry 1204, cause the processing circuitry 1204 to implement the method of any of the embodiments described herein (e.g., cooking methods 100, 700, 900, 1000, 1100 and/or flowchart 600). The machine-readable medium 1200 and/or the processing circuitry 1204 may be implemented by any of the controller 206, cloud computing service 210, user equipment 212 and/or controller 312 of Figures 2 or 3.

Figure 13 is a schematic drawing of apparatus 1300 for implementing various embodiments described herein. The apparatus 1300 may be implemented by any of the controller 206, cloud computing service 210, user equipment 212 and/or controller 312 of Figures 2 or 3.

The apparatus 1300 comprises processing circuitry 1302. The processing circuitry 1302 is configured to communicate with an interface 1304. The interface 1304 may be any interface (wireless or wired) implementing a communications protocol to facilitate exchange of data with other devices such as another part of the cooking ecosystem 200.

The apparatus 1300 further comprises a machine-readable medium 1306 (e.g., non-transitory or otherwise) storing instructions 1308 which, when executed by the processing circuitry 1302, cause the processing circuitry 1302 to implement various embodiments described herein (e.g., cooking method 100 or any of the associated embodiments).

Any of the models described herein may be implemented by the processing circuitry for implementing the cooking methods described herein. Thus, certain blocks of the cooking methods may involve use of such models in order to provide the stated functionality. The models may be ML-based or non-ML-based.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A cooking method (100), comprising:
receiving (102) first image data corresponding to a view associated with a food item at a first time of a cooking process implemented by a cooking apparatus;
receiving (104) second image data corresponding to a view associated with the food item at a second time of the cooking process;
comparing (106) the first image data with the second image data to detect an indication of liquid loss from the food item between the first time and the second time as a result of the cooking process; and
in response to the detected liquid loss being indicative of a transition from a first phase to a second phase of the cooking process where liquid loss as a result of the cooking process occurs at a higher rate during the second phase than the first phase, causing (108) the cooking apparatus to modify the cooking process.

2. The cooking method of claim 1, wherein:
in the first phase, liquid is retained by the food item; and
in the second phase, liquid is leached out by the food item.

3. The cooking method of any of claims 1 to 2, wherein the transition from the first phase to the second phase occurs when, during the cooking process, a structure of the food item undergoes a physical change as a result of the cooking process such that liquid is released from the structure.

4. The cooking method of any of claims 1 to 3, wherein the indication of liquid loss comprises a geometric change of the food item.

5. The cooking method (700) of claim 4, comprising detecting (702) the geometric change of the food item by identifying a change in position and/or size of at least part of the food item between the first and second image data.

6. The cooking method (700) of claim 5, comprising identifying (704) the transition from the first phase to the second phase by:
comparing the identified change in position and/or size with a threshold geometrical change value indicative of the transition; and
in response to the identified change crossing the threshold geometrical change value, causing the cooking apparatus to modify the cooking process.

7. The cooking method of any of claims 5 to 6, comprising identifying (706) the change in position by:
identifying a coordinate in the first image data that corresponds to a region of the food item;
identifying a coordinate in the second image data that corresponds to the region of the food item; and
identifying the change in position based on a change of the identified coordinate corresponding to the region of the food item between the first image data and the second image data.

8. The cooking method of any of claims 5 to 6, comprising identifying (708) the change in size by:
identifying a set of coordinates in the first image data that are indicative of a dimension of the food item at the first time;
identifying a set of coordinates in the second image data that are indicative of the dimension of the food item at the second time; and
identifying the change in size based on a change of identified coordinates between the first and second image data.

9. The cooking method of any of claims 1 to 8, wherein the indication of liquid loss comprises a change in an amount of visible liquid on a surface of the food item and/or on a support surface for the food item.

10. The cooking method (900) of claim 9, comprising using (902) a surface liquid detection model to detect, between the first and second image data, the change in the amount of visible liquid on the surface of the food item and/or on the support surface for the food item.

11. The cooking method (900) of claim 10, wherein the surface liquid detection model is configured to identify the transition from the first phase to the second phase by comparing the identified change in the amount of liquid on the surface of the food item and/or on the support surface with a threshold liquid change value indicative of the transition, the method further comprising causing (904) the cooking apparatus to modify the cooking process in response to the identified change crossing the threshold liquid change value.

12. The cooking method (1000) of any of claims 1 to 11, wherein where there is a plurality of food items to be cooked, the method comprises causing (1002) the cooking apparatus to modify the cooking process in response to identifying when, during the cooking process, a predefined number or proportion of the plurality of food items are associated with detected liquid loss indicative of the transition from the first phase to the second phase of the cooking process.

13. The cooking method (1100) of any of claims 1 to 12, comprising:
receiving (1102) data indicative of a type of the food item received by the cooking apparatus for cooking;
causing (1104) the cooking apparatus to apply heat at a first target temperature; and
in response to the detected liquid loss being indicative of the transition from the first phase to the second phase of the cooking process, causing (1106) the cooking apparatus to apply heat at a second, reduced, target temperature,
wherein the indication of the liquid loss detected during the cooking process is compared with a predefined threshold change value based on the type of the food item, wherein the predefined threshold change value is indicative of the transition from the first phase to the second phase of the cooking process.

14. A non-transitory machine readable medium (1200) storing instructions (1202) which, when executed by processing circuitry (1204), cause the processing circuitry to implement the cooking method of any of claims 1 to 13.

15. A cooking apparatus (300) for implementing a cooking process, comprising:
a cooking chamber (302) for receiving a food item (304);
a housing (306) defining the cooking chamber;
an air circulation system (308) for circulating air flow inside the cooking chamber;
a camera (310) for capturing images during the cooking process; and
a controller (312) configured to:
receive (102) first image data corresponding to a view associated with a food item at a first time of a cooking process implemented by the cooking apparatus;
receive (104) second image data corresponding to a view associated with the food item at a second time of the cooking process;
compare (106) the first image data with the second image data to detect an indication of liquid loss from the food item between the first time and the second time as a result of the cooking process; and
in response to the detected liquid loss being indicative of a transition from a first phase to a second phase of the cooking process where liquid loss as a result of the cooking process occurs at a higher rate during the second phase than the first phase, cause (108) the cooking apparatus to modify the cooking process.
